# FASCICULE DE BREVET EUROPEEN

(11) **EP 0 560 661 B1**
(45) Date de publication et mention de la délivrance du brevet: **20.12.1995**
(21) Numéro de dépôt: 93400582.8
(22) Date de dépôt: 05.03.1993
(51) Int. Cl.: G01P 15/125, G01P 15/13

(54) **Capteur accélérométrique capacitif et accéléromètre non asservi en comportant application**
Kapazitiver Beschleunigungsmessaufnehmer sowie einen solchen verwendender Beschleunigungsmesser ohne Kraftkompensation
Capacitive acceleration sensor and non counterbalancing accelerometer using such a sensor

(30) Priorité: 09.03.1992 FR 9202782
(43) Date de publication de la demande: 15.09.1993
(73) Titulaire: SAGEM SA, F-75783 Paris Cédex 16 (FR)
(72) Inventeur: Levy, Michel, F-95000 Cergy (FR); Permuy, Alfred, F-75010 Paris (FR)
(74) Mandataire: Fort, Jacques

(56) Documents cités:
- EP-A- 0 149 572
- US-A- 4 785 215
- US-A- 5 006 487
- Section EI, Week Y33, 27 Septembre 1977 Derwent Publications Ltd., London, GB; Class R, Page 33, AN G8484Y/33

## Description

L'invention concerne les capteurs accélérométriques capacitifs susceptibles d'être réalisés sous un faible volume et elle trouve une application particulièrement importante dans tous les domaines de l'industrie où il est nécessaire de disposer de capteurs miniatures de faible coût.

Elle concerne plus particulièrement les capteurs du type comprenant un substrat isolant portant une première électrode de mesure et comprenant un bras flexible de mesure en matériau semi-conducteur dont une partie terminale est solidarisée du substrat et dont l'autre partie terminale constitue une seconde électrode qui fait face à la première, la flexibilité du bras permettant à la seconde électrode de se déplacer vers le substrat et à partir du substrat en réponse à une accélération transversale aux électrodes.

On connaît déjà de tels capteurs dans lesquels la première partie terminale du bras flexible est fixée, par exemple par soudage d'un renflement terminal, au substrat. La différence de dilatation thermique entre le substrat, généralement constitué en un oxyde métallique tel que l'alumine, et le bras, constitué par exemple en silicium, provoque une modification de l'angle au repos du bras avec le substrat et donc de la capacité du condensateur formé par les électrodes. Cette modification du zéro est difficile à compenser de façon précise.

Pour réduire ce phénomène, il est proposé un capteur accélérométrique du type ci-dessus défini, caractérisé en ce que la première partie terminale du bras de mesure est fixée au substrat par l'intermédiaire d'une poutre ayant une résistance à la flexion au moins dix fois supérieure à celle du bras de mesure, sensiblement parallèle au bras de mesure, et d'un pied fixé rigidement au substrat et situé entre les deux extrémités du bras de mesure, les liaisons de la poutre avec le bras de mesure et avec le pied étant assimilables à des encastrements.

Pour réduire encore l'erreur résiduelle, la poutre est également fixée à un bras de référence parallèle au bras de mesure, de même longueur mais de module de flexion au moins dix fois supérieur à celui du bras de mesure, faisant face à une électrode de référence sensiblement de même surface que celle du condensateur de mesure.

En effectuant la mesure d'accélération par comparaison entre le condensateur de mesure et le condensateur de référence constitué par l'électrode de référence et le bras de référence, on peut pratiquement éliminer la dérive du zéro en fonction de la température. Seule la sensibilité du capteur change dans ce cas avec la température.

L'invention propose également un accéléromètre ayant un capteur du type ci-dessus défini placé dans un circuit en pont dont une diagonale est attaquée par un signal périodique alternatif, comprenant des moyens pour amplifier la tension alternative différentielle suivant l'autre diagonale du pont, des moyens de démodulation synchrone et des moyens de réinjection de deux tensions continues de rééquilibrage suivant la diagonale de mesure.

La tension de sortie ainsi obtenue est une fonction linéaire de l'accélération pour les déformations faibles.

Diverses dispositions relatives peuvent être utilisées pour le bras de mesure et le bras de référence. En particulier l'un des deux bras peut être en forme de fourche et encadrer l'autre. Les deux bras peuvent également présenter des doigts transversaux à leurs extrémités, ces doigts étant imbriqués les uns dans les autres. Avantageusement, pour augmenter la symétrie du capteur, le bras de mesure porte, à l'opposé du substrat, une masse qui peut être constituée par un épaississement local ou par un report de matériau lourd.

L'invention sera mieux comprise à la lecture de la description qui suit de modes particuliers de réalisation, donnés à titre d'exemples non limitatifs. La description se réfère aux dessins qui l'accompagnent, dans lesquels :
- la figure 1 est un schéma de principe d'un capteur suivant un premier mode de réalisation de l'invention, montré en coupe suivant un plan médian perpendiculaire au substrat ;
- la figure 2 est une vue en perspective d'une fraction du capteur de la figure 1, séparée du substrat ;
- la figure 3 montre une constitution possible d'accéléromètre utilisant un capteur du genre montré en figure 1 ou 2 ;
- la figure 4 montre une constitution possible du démodulateur et des boucles de linéarisation de l'accéléromètre de la figure 3 ; et
- la figure 5 montre schématiquement, en vue de dessus, une autre ,constitution possible des bras d'un capteur selon l'invention.

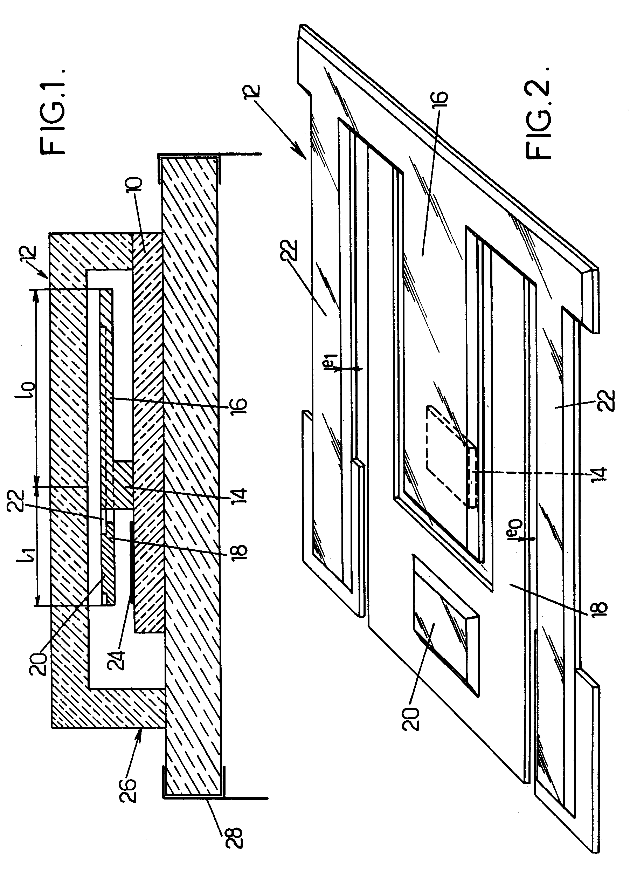

Les figures 1 et 2, où l'échelle n'est pas respectée pour plus de clarté, montrent une constitution possible de capteur selon l'invention. Le capteur comprend un substrat 10 isolant, par exemple en alumine du genre utilisé comme support de circuit à couche mince, et un ensemble rapporté 12 en matériau conducteur (au moins en surface), par exemple en silicium dopé. Cet ensemble 12 est monobloc. Il peut être réalisé par photogravure, en mettant en oeuvre des techniques bien connues en électronique. L'ensemble 12 comporte un pied 14 fixé, par exemple par des dépôts de chrome, de nickel et d'or destiné à former un eutectique avec le silicium, sur le substrat. A partir du pied s'étend une poutre 16 prévue pour être sensiblement parallèle au substrat, de largeur et d'épaisseur suffisantes pour qu'elle ne subisse pratiquement pas de déformation pour la plage d'accélération à mesurer. A partir de la poutre s'étend, vers le pied 14 et au delà, un bras de mesure 18 qui a, dans le cas montré en figures 1 et 2, une forme en U encadrant la poutre 16. Ce bras 18 est plus mince que la poutre et son épaisseur e₀ est prévue de façon que le bras fléchisse de façon significative sous l'action des accélérations qu'il subit dans le sens de son épaisseur e₀. Dans la pratique, pour les accélérations rencontrées dans des applications telles que l'automobile, on peut donner au bras 18 une longueur de l'ordre du centimètre et une épaisseur e₀ de l'ordre de 30 »m. Une surépaisseur est avantageusement prévue à l'extrémité du bras 18, sur le fond du U, pour constituer une masse 20 augmentant la sensibilité. Souvent on adoptera, entre la partie terminale du bras 18 et une électrode 24 déposée sur le substrat, une distance qui est également d'environ 30 »m. Souvent le rapport entre la différence l₁ des longueurs du bras 18 et de la poutre 16 et la longueur l₀ de la poutre est compris entre un quart et un demi.

Le capteur montré en figure 1 et 2 comporte également un bras de référence double 22 placé parallèlement au bras 18 et sensiblement de même longueur. On peut regar-der ce bras 22 comme étant en forme de fourche encadrant à la fois la poutre 16 et le bras 18. L'épaisseur e₁ du bras 22 de référence est nettement supérieure à celle e₀ du bras de mesure, de façon que toutes ses déformations en flexion soient négligeables par rapport à celle du bras de mesure. Dans la pratique, on donnera au bras de référence 22 un module de flexion au moins 10 fois, généralement au moins 100 fois, plus élevé que celui du bras 18 (ce résultat pouvant être atteint avec une épaisseur multipliée par 10). La partie terminale du bras 18 constitue une électrode de condensateur, faisant face à une seconde électrode, non représentée, réalisée sur le substrat 10 par un dépôt conducteur. Il est avantageux de donner une surface sensiblement égale à l'électrode 24 et à l'ensemble des électrodes coopérant avec le bras de référence 22 de façon que les deux condensateurs ainsi constitués aient des capacités égales au repos.

Le capteur ainsi constitué peut être placé dans un boîtier de protection 26, susceptible d'être mis sous vide pour augmenter le facteur de surtension. Il est cependant préférable en général de laisser du gaz dans le boîtier pour réaliser un amortissement visqueux évitant la résonance du capteur. Les électrodes peuvent être reliées à des broches sortant du boîtier par l'intermédiaire de pistes conductrices 28. Cependant on peut préférer placer le circuit de mesure du déséquilibre des condensateurs et d'élaboration d'un signal représentatif de l'accélération à l'intérieur du boîtier 26, par exemple sous forme d'un circuit hybride porté par le substrat 10.

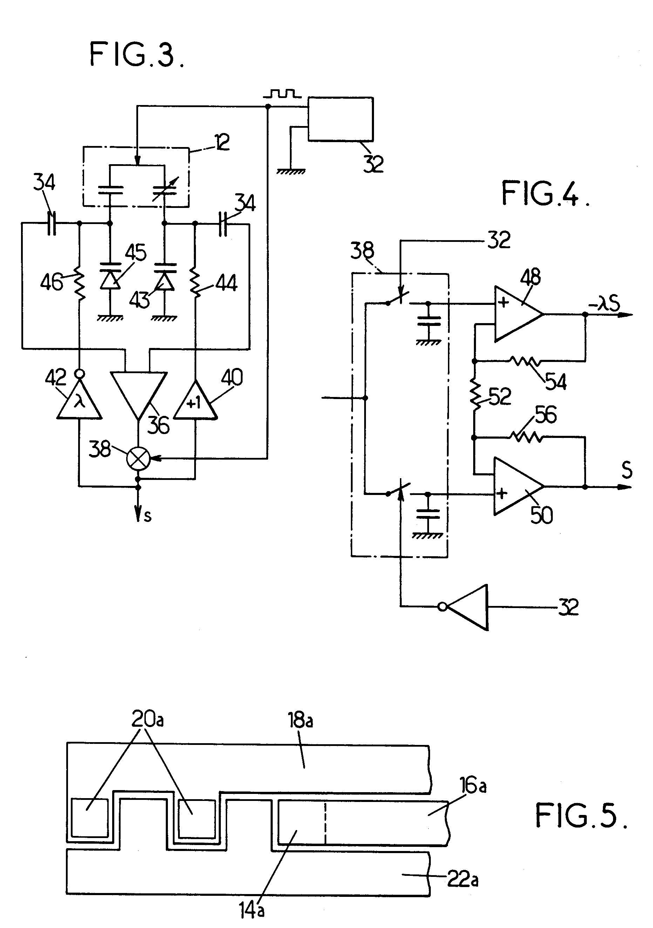

Le circuit électronique peut notamment avoir la constitution montrée schématiquement en figure 3. Les deux condensateurs constitués par l'ensemble 12 sont associés à deux diodes à capacité variable 43, 45 pour former un circuit en pont capacitif dont une diagonale est attaquée par un signal périodique fourni par un générateur 32. La composante alternative apparaissant dans l'autre diagonale du pont est prélevée par l'intermédiaire de condensateurs respectifs 34 et appliquée à un amplificateur différentiel 36. Un démodulateur synchrone 38 fournit un signal de sortie s représentatif de l'accélération lorsque la température est peu variable et lorsque les déformations sont suffisamment faibles pour que l'on reste dans le domaine linéaire de la réponse.

Un circuit limité aux composants décrits ci-dessus fournirait un signal s proportionnel au déséquilibre du pont, ne variant pas de façon linéaire avec l'accélération. Ce signal peut être linéarisé par des circuits placés en aval, utilisant une courbe de calibrage. Il est cependant plus commode de linéariser la réponse par les boucles de rééquilibrage du pont, ramenant aux extrémités de la diagonale de mesure des tensions continues appropriées, élaborées à partir de la sortie du modulateur synchrone. Sur la figure 3, ces boucles sont représentées sous forme d'un amplificateur 40 ou 42, suivi d'une résistance 44 ou 46. Pour un gain égal à un de l'amplificateur 40, on adopte, pour l'amplificateur 42, un gain - λ. La valeur de λ peut être déterminée en analysant les non-linéarités pouvant affecter la réponse. Celles-ci peuvent provenir du fait que la capacité du condensateur de mesure est inversement proportionnelle à l'accélération, ou des caractéristiques capacité/tension des diodes 43, 45. Aux faibles déformations, le signal de sortie s peut s'écrire comme un développement limité en fonction de l'accélération. Lorsqu'on utilise le circuit de la figure 3, le gain intervient dans l'expression des coefficients de ce développement limité, dans la mesure où ce gain λ agit sur les capacités des diodes 43, 45. On choisit alors la valeur de λ de façon à annuler le coefficient d'ordre 2, ce qui conduit à une réponse quasi-linéaire de l'accéléromètre.

Dans la pratique, les boucles de rééquilibrage et de linéarisation peuvent avoir la constitution montrée en figure 4. Sur cette figure, les interrupteurs et les condensateurs contenus dans le cadre en traits mixtes 38 représentent le démodulateur synchrone de la figure 3. Les signaux démodulés sont appliqués sur les entrées "plus" de deux amplificateurs différentiels 48 et 50 dont les entrées "moins" sont reliées par une résistance 52. Les résistances de bouclage 54 et 56 des amplificateurs différentiels 48 et 50 sont proportionnées aux gains à obtenir. Dans la pratique, la résistance de bouclage 54 sera souvent approximativement moitié de la résistance de bouclage 56. Les signaux de sortie S et - λ S sont renvoyés sur les extrémités de la diagonale de mesure pour commander les capacités des diodes 43, 45.

L'invention est susceptible de nombreuses variantes de réalisation. En particulier, les bras de mesure et de référence peuvent avoir une disposition relative différente de celle qui est décrite. Sur la figure 5, où les éléments correspondant à ceux de la figure 2 portent le même numéro de référence affecté de l'indice a, le bras de mesure 18a et le bras de référence 22a sont placés de part et d'autre de la poutre 16a. Leurs extrémités opposées à celles qui ont une liaison d'encastrement avec la poutre, par l'intermédiaire de la barre transversale 58, présentent des doigts transversaux 60 imbriqués les uns dans les autres. Le substrat (non représenté) porte des électrodes dont l'une 62 constitue un condensateur avec le bras de référence et dont l'autre constitue un condensateur avec le bras de mesure. Comme dans le cas précédent, les électrodes coopérant avec les deux bras ont la même surface. Le bras de mesure a encore une flexibilité nettement plus élevée que le bras de référence. Dans la pratique, son module de flexion sera généralement environ cent fois plus faible, ce qui se traduit par un rapport entre les épaisseurs de dix environ.

## Revendications

1. Capteur accélérométrique capacitif comprenant un substrat isolant (10) portant une première électrode de mesure (24) et comprenant un bras flexible de mesure (18) en matériau conducteur ou semi-conducteur dont une première partie terminale est solidarisée du substrat (10) et dont l'autre partie terminale constitue une deuxième électrode qui fait face à la première, la flexibilité du bras permettant à la seconde électrode de se déplacer vers le substrat et à partir du substrat en réponse à une accélération dirigée transversalement aux électrodes,
caractérisé en ce que la première partie terminale est fixée au substrat par l'intermédiaire d'une poutre (16) ayant un module de flexion au moins dix fois supérieur à celui du bras de mesure (18), sensiblement parallèle au bras de mesure, et d'un pied (14) fixé rigidement au substrat (10) et situé entre les deux extrémités du bras de mesure, les liaisons de la poutre (16) avec le bras de mesure (18) et avec le pied (14) étant assimilables à un encastrement.

2. Capteur selon la revendication 1, caractérisé en ce que le bras de mesure (18) est en forme de U dont le fond porte une masse additionnelle (20).

3. Capteur selon la revendication 1 ou 2, caractérisé en ce que la poutre (16) est également fixée à un bras de référence (22) placé parallèlement au bras de mesure (18), de même longueur mais de module de flexion au moins 10 fois supérieur à celui du bras de mesure, placé face à une électrode de référence de même surface que celle du condensateur du mesure.

4. Capteur selon la revendication 3, caractérisé en ce qu'au moins un des bras est en forme de fourche et encadre la poutre (16).

5. Capteur selon la revendication 3 ou 4, caractérisé en ce que le bras de référence (22) est en forme de fourche et encadre la poutre et le bras de mesure.

6. Capteur selon la revendication 3, caractérisé en ce que le bras de mesure (18a) et le bras de référence (22a) comportent, à leurs parties terminales non encastrées, des doigts transversaux (60) imbriqués les uns dans les autres et coopérant avec des électrodes respectives prévues sur le substrat.

7. Accéléromètre, caractérisé en ce qu'il comprend un capteur selon l'une quelconque des revendications 3 à 6, en ce que les condensateurs constitués par le bras de mesure et le bras de référence dudit capteur sont placés dans un circuit en pont dont une diagonale est attaquée par un signal périodique alternatif, et en ce qu'il comprend des moyens (36) pour amplifier la tension alternative différentielle suivant l'autre diagonale du pont, des moyens (38) de démodulation synchrone et des moyens de réinjection de tensions continues de rééquilibrage suivant la diagonale de mesure.

8. Accéléromètre selon la revendication 7, caractérisé en ce que le circuit en pont comprend, outre les condensateurs constitués par le bras de mesure et le bras de référence, deux diodes (43, 45) ayant des capacités respectives commandées par les tensions continues de rééquilibrage de manière à rendre le signal de sortie (s) des moyens de démodulation synchrone sensiblement linéaire en fonction de l'accélération mesurée.

## Claims

1. A capacitive acceleration sensor comprising an insulating substrate (10) supporting a first measurement electrode (24) and comprising a flexible measurement arm of conductive or semiconductor material, having a first end portion secured to the substrate (10) and another end portion forming a second measurement electrode facing the first measurement electrode, flexibility of the arm allowing the second measurement electrode to be displaced towards and away from the substrate in response to acceleration in a direction transverse to the electrodes,
characterized in that the first end portion is secured to the substrate via a beam (16) having a bending modulus at least ten times greater than that of the measurement arm (18) and substantially parallel to the measurement arm, and via a foot (14) rigidly secured to the substrate and situated between the two ends of the measurement arm, the connections of the beam (16) to the measurement arm (18) and to the foot (14) being of fixed-end type.

2. A sensor according to claim 1, characterized in that the measurement arm (18) is in the shape of a U, the base of which carries an additional mass (20).

3. A sensor according to claim 1 or 2, characterized in that the beam (16) is also secured to a reference arm (22) which is parallel to and of the same length as the measurement arm (18), but which has a bending modulus at least 10 times that of the measurement arm, the reference arm facing a reference electrode of the same surface area as that of the first measurement electrode.

4. A sensor according to claim 3, characterized in that at least one of the arms is in the shape of a fork and surrounds the beam (16).

5. A sensor according to claim 3 or 4, characterized in that the reference arm (22) is in the shape of a fork and surrounds the beam and the measurement arm.

6. A sensor according to the claim 3, characterized in that the measurement arm (18a) and the reference arm (22a) comprise, at their ends which are not fixed, transverse fingers (60) which are interleaved and which cooperate with respective electrodes formed on the substrate.

7. An accelerometer characterized in that it comprises a sensor according to any one of claims 3 to 6, in that capacitors constituted by the measurement arm and the reference arms of said sensor are placed in a bridge circuit, having a diagonal supplied with an alternating periodic signal, and in that it further includes means (36) for amplifying the alternating differential voltage which appears across the other diagonal of the bridge, synchronous demodulation means (38), and means for re-injecting rebalancing d.c. voltages into the measuring diagonal.

8. An accelerometer according to claim 7, characterized in that the bridge circuit comprises, in addition to the capacitors constituted by the measurement arm and the reference arms, two diodes (43,45) having respective capacitances controlled by the rebalancing d.c.voltages so that the output signals of the synchronous demodulation means is a substantially linear function of the measured acceleration.

## Patentansprüche

1. Kapazitiver Beschleunigungssensor mit einem isolierenden Substrat (10), welches eine erste Meßelektrode (24) trägt und einen flexiblen Meßarm (18) aus leitendem oder halbleitendem Material aufweist, dessen einer Endbereich fest mit dem Substrat (10) ist, und dessen anderer Endbereich eine zweite Elektrode bildet, welche gegenüberliegend zur ersten liegt, wobei die Flexibilität des Armes der zweiten Elektrode erlaubt, sich gegen das Substrat und vom Substrat weg zu bewegen in Antwort auf eine transversal zu den Elektroden gerichtete Beschleunigung,
dadurch gekennzeichnet,
daß der erste Endbereich am Substrat durch Zwischenanordnung eines Trägers (16), der einen Biegungsmodul zehnmal größer als der des Meßarmes (18) aufweist und etwa parallel zum Meßarm ist, und eines Fußes (14) befestigt ist, welcher am Substrat (10) befestigt ist und zwischen den beiden Enden des Meßarmes liegt, wobei die Verbindungen des Trägers (16) mit dem Meßarm (18) und dem Fuß (14) vergleichbar sind mit einem festen Einbau.

2. Sensor nach Anspruch 1,
dadurch gekennzeichnet,
daß der Meßarm (18) die Form eines U aufweist, dessen Fußbereich eine Zusatzmasse (20) trägt.

3. Sensor nach Anspruch 1 oder 2,
dadurch gekennzeichnet,
daß der Träger (16) außerdem an einem Referenzarm (22) befestigt ist, der parallel zum Meßarm (18) angeordnet ist, mit derselben Länge aber einem Biegungsmodul, der wenigstens zehnmal größer als derjenige des Meßarmes ist, angeordnet gegenüberliegend zu einer Referenzelektrode derselben Oberfläche wie derjenigen des Meßkondensators.

4. Sensor nach Anspruch 3,
dadurch gekennzeichnet,
daß wenigstens einer der Arme die Form einer Gabel aufweist und den Träger (16) umschließt.

5. Sensor nach Anspruch 3 oder 4,
dadurch gekennzeichnet,
daß der Referenzarm (22) die Form einer Gabel aufweist und den Träger und den Meßarm umschließt.

6. Sensor nach Anspruch 3,
dadurch gekennzeichnet,
daß der Meßarm (18a) und der Referenzarm (22a) an ihren nicht eingebauten Endbereichen transversale Zapfen (60) aufweisen, die ineinandergreifen und mit den jeweiligen auf dem Substrat vorgesehenen Elektroden zusammenwirken.

7. Beschleunigungsmesser,
dadurch gekennzeichnet,
daß dieser einen Sensor nach irgendeinem der Ansprüche 3 bis 6 aufweist, daß die durch den Meßarm und den Referenzarm dieses Sensors gebildeten Kondensatoren in einer Brückenschaltung angeordnet sind, deren eine Diagonale von einem periodischen wechselnden Signal beaufschlagt wird, und daß dieser Mittel (36) zur Verstärkung der wechselnden Differentialspannung entlang der anderen Diagonale der Brücke, Mittel (38) zur synchronen Demodulation und Mittel zum Wiedereingeben von kontinuierlichen Spannungen zum Wiederausgleich entlang der Meßdiagonalen aufweist.

8. Beschleunigungsmesser nach Anspruch 7,
dadurch gekennzeichnet,
daß die Brückenschaltung außer den von dem Meßarm und dem Referenzarm gebildeten Kondensatoren zwei Dioden (43,45) aufweist, welche jeweils Kapazitäten haben, die durch die kontinuierlichen Wiederausgleichsspannungen derart gesteuert werden, um das Signal des Ausgangs (der Ausgänge) der synchronen Demodulationsmittel etwa linear in Funktion der gemessenen Beschleunigung zu machen.
